(19) Europäisches Patentamt / European Patent Office / Office européen des brevets

(11) EP 3 028 071 B1

(12) EUROPEAN PATENT SPECIFICATION

(45) Date of publication and mention of the grant of the patent:
**18.07.2018 Bulletin 2018/29**

(21) Application number: **14742555.7**

(22) Date of filing: **25.07.2014**

(51) Int Cl.:
**G01V 1/28** (2006.01)  **G01V 1/30** (2006.01)

(86) International application number:
**PCT/EP2014/066101**

(87) International publication number:
**WO 2015/014762 (05.02.2015 Gazette 2015/05)**

(54) **METHOD AND DEVICE FOR THE GENERATION AND APPLICATION OF ANISOTROPIC ELASTIC PARAMETERS IN HORIZONTAL TRANSVERSE ISOTROPIC (HTI) MEDIA**

VERFAHREN UND VORRICHTUNG ZUR ERZEUGUNG UND ANWENDUNG VON ANISOTROPISCHEN ELASTISCHEN PARAMETERN IN HORIZONTALEN TRANSVERSAL-ISOTROPEN (HTI-)MEDIEN

PROCÉDÉ ET DISPOSITIF PERMETTANT DE GÉNÉRER ET D'APPLIQUER DES PARAMÈTRES ÉLASTIQUES ANISOTROPES DANS DES MILIEUX ISOTROPES TRANSVERSES HORIZONTAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2013 US 201361859361 P**

(43) Date of publication of application:
**08.06.2016 Bulletin 2016/23**

(73) Proprietor: **CGG Services SAS**
**91300 Massy (FR)**

(72) Inventors:
• **MESDAG, Peter**
  **F-91300 Massy (FR)**
• **DEBEYE, Harry**
  **F-91300 Massy (FR)**
• **BORNARD, Raphael**
  **F-91300 Massy (FR)**

(74) Representative: **Petit, Maxime**
**Ipsilon**
**Le Centralis**
**63, avenue du Général Leclerc**
**92340 Bourg-la-Reine (FR)**

(56) References cited:
**US-A1- 2010 312 534    US-A1- 2011 222 370**
**US-B2- 6 901 333**

• **RÜGER A: "Variation of P-wave reflectivity with offset and azimuth in anisotropic media", GEOPHYSICS, SOCIETY OF EXPLORATION GEOPHYSICISTS, US, vol. 63, no. 3, 1 May 1998 (1998-05-01), pages 935-947, XP002326797, ISSN: 0016-8033, DOI: 10.1190/1.1444405**

EP 3 028 071 B1

## Description

### RELATED APPLICATION

The present application is related to, and claims priority from U.S. Provisional Patent Application No. 61/859,361, filed July 29, 2013, entitled "METHOD AND DEVICE FOR THE GENERATION AND APPLICATION OF ANISOTROPIC ELASTIC PARAMETERS IN HTI MEDIA," to Peter MESDAG, Harry DEBEYE and Raphael BORNARD.

### TECHNICAL FIELD

Embodiments of the subject matter disclosed herein generally relate to methods and devices for seismic data modeling and the interpretation and estimating of earth parameters from seismic data and, more particularly, to methods and devices for incorporating and accounting for the effects of anisotropy in seismic applications associated with HTI media.

### BACKGROUND

Seismic data acquisition involves the generation of seismic waves in the earth using an appropriate source or sources and the recording of the response of the earth to the source waves. Seismic data is routinely acquired to obtain information about subsurface structure, stratigraphy, lithology and fluids contained in the earth's the earth's rocks. The seismic response is in part generated by the reflection of seismic waves in the subsurface where there are changes in those earth properties that impact seismic wave propagation. The process that describes how source signals propagate and how the response is formed is termed seismic wave propagation.

Modeling is used to gain understanding of seismic wave propagation and to help analyze seismic signals. In modeling, a model of earth properties is posed and a seismic wave propagation modeling algorithm is used to synthesize seismic responses. Models of earth properties are often specified in terms of physical parameters. An example is the group of modeling methods that today are widely used to study changes in seismic reflection amplitudes with changing angle of incidence of a plane wave reflecting from a flat interface. See, e.g., Castagna, J. P. and Backus, M. M., Eds., "Offset-dependent reflectivity - Theory and practice of AVO analysis", 1993, Investigations in Geophysics Series No. 8, Society of Exploration Geophysicists, chapter I. In this model, the two half-spaces above and below the interface are assumed to be homogeneous and isotropic so that each half-space can be described with just three earth parameters, e.g., p-wave velocity, s-wave velocity and density. In practice alternative triplets of parameters may be used, e.g., p-wave impedance, s-wave impedance and density. These parameters are referred to as elastic parameters. In some cases, modeling methods start from other earth parameters, and the transforms to elastic parameters are included as part of the modeling method.

Seismic modeling is often referred to as forward modeling. The reverse process of forward modeling is called inverse modeling or inversion. The goal of inversion is to estimate earth parameters given the measured seismic responses. Many inversion methods are available and known to those skilled in the art. They all have in common that they are based on some forward model of seismic wave propagation. Some of these methods make use of certain input elastic parameter data, e.g., in the form of low frequency trend information or statistical distributions. Other inversion methods do not use elastic parameters upon input, and use some calibration of seismic amplitudes, performed in a pre-processing step or as part of an algorithm. Dependent on the seismic data acquisition geometries, estimates of earth rock properties obtained from any of these inversion methods are generally provided as a series of 2D sections or 3D volumes of elastic parameters.

An important component of modeling and inversion is the seismic wavelet. Many methods are available for wavelet estimation. Inversion is generally followed by a step of analysis and interpretation of the inversion results. Available borehole log measurements are used to support the analysis and interpretation.

Most of today's routinely applied methods for forward modeling, wavelet estimation, inversion, analysis and interpretation of inversion results, and analysis and interpretation of seismic data have, as a core assumption, that the earth can be locally modeled by a stack of layers, wherein each layer is isotropic, i.e., having a physical parameter or property which has the same value when measured in different directions. Such methods are further referred to herein as "isotropic" methods.

However, in fact, the earth subsurface is generally anisotropic and acquired seismic data contains the effects of anisotropy. To distinguish such seismic data, it is termed herein "anisotropic seismic data". The earth parameters that describe anisotropy are referred to as anisotropy parameters. To improve the accuracy of seismic modeling, wavelet estimation, inversion, and the analysis and interpretation of inversion results and seismic data in case of anisotropic seismic data requires that anisotropy is accounted for. Examples of methods to handle anisotropy are described by Rüger, A., 2002, "Reflection Coefficients and Azimuthal AVO Analysis in Anisotropic Media", Geophysical Monograph Series No. 10, Society of Exploration Geophysicists; and Thomsen, L., 2002, "Understanding Seismic Anisotropy in Exploration and Exploitation", Distinguished Instructor Series No. 5, Society of Exploration Geophysicists/European Association of Geoscientists and Engineers.

Incorporation of the anisotropy parameters in these methods makes them mathematically and numerically more complex than the equivalent isotropic methods. Also, methods where seismic modeling is used, such as in wavelet estimation and in certain seismic data analysis and interpretation methods, would need to be extended to incorporate the anisotropy parameters, making them more complex in utilization. Further, from the perspective of inversion, explicit incorporation of anisotropy parameters is even more disadvantageous. Performing inversion for the elastic parameters from amplitude-variation with offset (AVO) seismic data is recognized to be a difficult problem for most seismic data acquisition geometries. For example, including the anisotropy parameters in inversion as parameters that also need to be recovered in the inversion process further increases the number of unknowns and makes the inverse problem more difficult. Addition of more parameters and coping with these difficulties also complicates the analysis and interpretation of inversion results.

U.S. Patent No. 6,901,333, issued on May 31, 2005, to Van Riel and Debeye, describes techniques for generating and applying anisotropic elastic parameters which address some of these problems for so-called vertically transverse isotropic (VTI) media which possesses polar anisotropy characteristics. However, not all seismic acquisitions are performed on subsurfaces having VTI media. Instead, some seismic acquisitions are performed on subsurfaces having horizontally transverse isotropic (HTI) media which possess azimuthal anisotropy characteristics. US 2010/0312534 describes a method for modeling anisotropic elastic properties of a subsurface region comprising mixed fractured rocks and other geological bodies. P-waves and fast and slow S-waves logs are obtained, and an anisotropic rock physics model of the subsurface region is developed. P- and fast and slow S-waves logs at the well direction are calculated using a rock physics model capable of handling fractures and other geological factors. Calculated values are compared to measured values in an iterative model updating process.

Accordingly, it would be desirable to provide systems and methods that avoid the afore-described problems and drawbacks, and provide systems and methods to incorporate and generate anisotropy parameters in applications such as seismic modeling, wavelet estimation, inversion and the like, as well as analysis and interpretations of such data, for seismic acquisitions being performed with respect to azimuthally anisotropic (or equivalently, horizontally transverse isotropic (HTI)) media.

## SUMMARY

These, and other, aspects associated with processing of seismic data acquired with respect to data acquired via seismic acquisitions being performed with respect to azimuthally anisotropic (or equivalently, horizontally transverse isotropic (HTI)) media are addressed herein.
According to an embodiment, a method according to claim 1 is provided.
According to another embodiment, a system according to claim 10 is provided.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 illustrates a seismic acquisition system whose acquired data can be processed to compensate for azimuthal anisotropy according to embodiments;
Figure 2(a) depicts elastic wave reflection from vertically transverse isotropic (VTI) media;
Figure 2(b) shows elastic wave reflection from horizontally transverse isotropic (HTI) media;
Figure 3 shows a plot of isotropic and anisotropic seismic reflection coefficient amplitudes as a function of angle;
Figure 4 is a flowchart of a method according to an embodiment;
Figure 5 shows a plot of seismic reflection coefficient amplitudes as a function of angle for isotropic elastic parameters, anisotropic elastic parameters and isotropic modeling with the anisotropic elastic parameters for one location;
Figure 6 shows a plot of seismic reflection coefficient amplitudes as a function of angle for isotropic elastic parameters, anisotropic elastic parameters and isotropic modeling with the anisotropic elastic parameters for another location;
Figure 7 shows a comparison of elastic parameters and the anisotropic elastic parameters on borehole log data;
Figure 8 is a flowchart of a method according to another embodiment; and

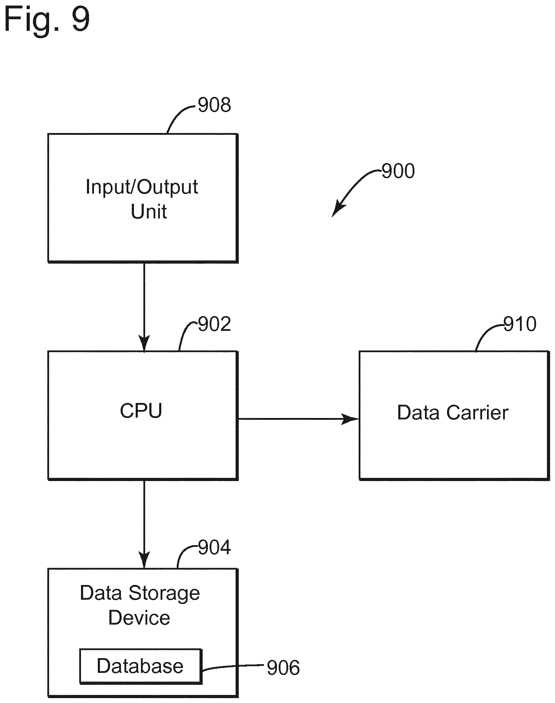

Figure 9 shows a block diagram of a computer system which can be used for implementation of embodiments described herein.

## DETAILED DESCRIPTION

The following description of the embodiments refers to the accompanying drawings. The same reference numbers in different drawings identify the same or similar elements. The following detailed description does not limit the invention. Instead, the scope of the invention is defined by the appended claims. Some of the following embodiments are discussed, for simplicity, with regard to the terminology and structure of maximizing the available information associated with parameters variations with a given set of source-receiver pairs by avoiding destructive summation. However, the embodiments to be discussed next are not limited to these configurations, but may be extended to other arrangements as discussed later.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

The embodiments described below include, for example, methods to and systems which incorporate and account for the effects of anisotropy in seismic applications associated with horizontally transverse isotropic (HTI) media, i.e., subsurface layers being imaged which possess azimuthal anisotropy characteristics. Among other things, embodiments described herein provide a method for transforming earth elastic and anisotropy parameters associated with HTI media into new earth parameters and the use of such anisotropic parameters in such seismic data processing applications or techniques including, but not limited to, for example, seismic modeling, wavelet estimation, inversion, the analysis and interpretation of inversion results, and the analysis and interpretation of seismic data.

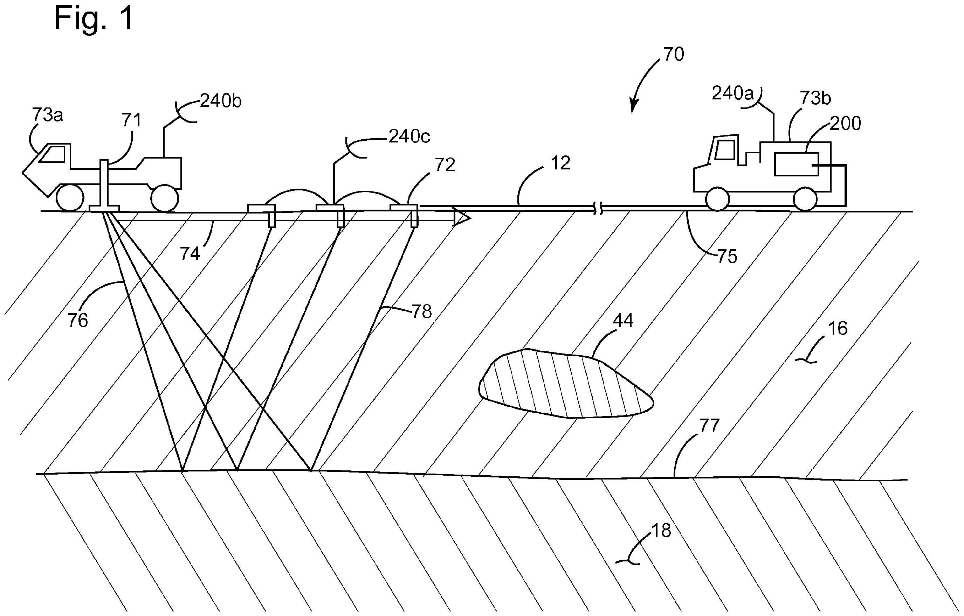

Prior to discussing such embodiments in detail, some context associated with seismic acquisition systems generally, which generate seismic data to which such embodiments can be applied, will first be provided. For example, Figure 1 depicts a land seismic exploration system 70 for transmitting and receiving seismic waves intended for seismic exploration in a land environment. At least one purpose of system 70 is to determine the absence, or presence of hydrocarbon deposits 44, or at least the probability of the absence or presence of hydrocarbon deposits 44, which are shown in Figure 1 as being located in first sediment layer 16.

System 70 comprises a source consisting of a vibrator 71, located on first vehicle/truck 73a, operable to generate a seismic signal (transmitted waves), a plurality of receivers 72 (e.g., geophones) for receiving seismic signals and converting them into electrical signals, and seismic data acquisition system 200 (that can be located in, for example, vehicle/truck 73b) for recording the electrical signals generated by receivers 72. Source 71, receivers 72, and data acquisition system 200, can be positioned on the surface of ground 75, and all interconnected by one or more cables 12. Figure 1 further depicts a single vibrator 71 as the source of transmitted acoustic waves, but it should be understood by those skilled in the art that the source can actually be composed of one or more vibrators 71. Furthermore, vehicle 73b can communicate with vehicle 73a via antenna 240a, 240b, respectively, wirelessly. Antenna 240c can facilitate communications between receivers 72 and second vehicle 73b and/or first vehicle 73a.

Vibrator 71 is operated during acquisition so as to generate a seismic signal. This signal propagates firstly on the surface of ground 75, in the form of surface waves 74, and secondly in the subsoil, in the form of transmitted ground waves 76 that generate reflected waves 78 when they reach an interface 77 between two geological layers, e.g., first and second layers 16,18, respectively. Each receiver 72 receives both surface wave 74 and reflected wave 78 and converts them into an electrical signal in which are superimposed the component corresponding to reflected wave 78 and the component that corresponds to surface wave 74, the latter of which is undesirable and should be filtered out as much as is practically possible.

Those skilled in the art will appreciate that, although Figure 1 depicts a particular land seismic system, the embodiments described hereto are not limited in their application to seismic data acquired using this type of land seismic system nor are they limited to usage with land seismic systems as a genre, e.g., they can also be used with seismic data acquired using marine seismic systems. More specifically, it is anticipated that seismic data associated with HTI media having azimuthal anisotropy will likely be collected by wide azimuth (WAZ) seismic acquisition systems.

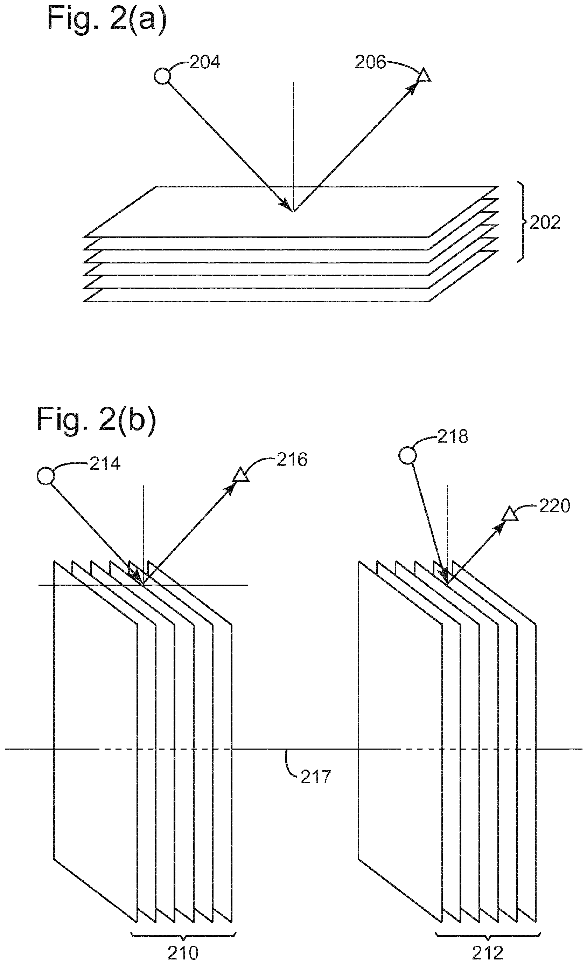

As mentioned in the Background section, another important contextual consideration for the present discussion is the type of media being imaged by, e.g., system 70 described above. Looking to Figures 2(a) and 2(b) examples of the different types of stratified media which can be imaged via seismic acquisition are conceptually illustrated. Figure 2(a) depicts a VTI anisotropic medium having a plurality of horizontally stratified layers 202, relative to a source 204 and receiver 206 that are used to image the medium. VTI media like that shown in Figure 2(a) is typically found where gravity is the dominant factor in the stratification of the layers in the medium to shale, and is otherwise known as media which has polar anisotropy. As mentioned above, this VTI type of media is that which is analyzed, and whose anisotropy is modeled, in the above U.S. Patent No. 6,901,333.

By way of contrast, consider now Figure 2(b) wherein HTI anisotropic mediums 210 and 212 are illustrated. The left side of Figure 2(b) illustrates the case with vertically stratified media 210 relative to a source-receiver pair 214, 216 which is oriented in a direction of the principle anisotropy axis 217. The right side of Figure 2(b) illustrates another HTI anisotropic medium 212 wherein a source-receiver pair 218, 220 is oriented in a direction perpendicular to the direction of the principle anisotropy axis 217. It should be noted that HTI media is typically associated with cracks, fractures and stress and can be found where regional stress is the dominant stratification factor and is otherwise known as media which have azimuthal anisotropy. The following embodiments describe techniques for modeling anisotropy parameters associated with media such as that described above with respect to Figure 2(b).

With this in mind note that, in seismic data, important information about earth elastic and anisotropy parameters is embedded in the change of seismic amplitudes as a function of the separation between sources and receivers. This is referred to as Amplitude Versus Offset (AVO). In many applications AVO data is converted to other domains, for example to angles for Amplitude Versus Angle (AVA) analysis and interpretation. Further, rather than studying the data at the level of records, practitioners often use partial stacks of records. In this way data is reduced and robustness improved, yet the key characteristics of the amplitude changes with offset, angle or other parameter are retained. For purposes of the description herein, and in keeping with industry practice, all methods that make use of seismic amplitude changes and in keeping with industry practice, all methods that make use of seismic amplitude changes originating from the measurement of seismic data holding data records with different source-receiver separation are collectively referred to herein as AVO methods.

The relationship that links the subsurface parameters to seismic AVO amplitudes is determined by seismic wave propagation modeling. For the most general case this leads to a very complex relationship that can only be solved by numerical wave equation modeling. Most modeling methods in practical use today are based on a simplified wave propagation model.

An example of a commonly used class of AVO modeling methods, as described by the book edited by Castagna, J. P. and Backus, M. M., entitled "Offset-dependent reflectivity - Theory and practice of AVO analysis", published in the Investigations in Geophysics Series, No. 8, Society of Exploration Geophysicists (1993) hereafter "Castagna", is based on the following simplified seismic wave propagation model: the earth is stratified into isotropic parallel layers; seismic waves propagate as plane waves impinging on each interface at a constant angle; each interface acts as an independent reflector; transmission effects are neglected, other than ray bending; and the calculated plane wave reflection coefficients are based on the assumption of isotropic half spaces above and below the reflector interface.

Thus, in this specific example, a very simple model of the earth and of wave propagation is assumed. As described by Castagna, even in this example of a simplified seismic wave propagation model, the resulting Zoeppritz equations that describe the AVO relationship are quite complex. Practitioners have therefore turned to approximations of the Zoeppritz equations. In particular, the 3-term Aki-Richards, the 3-term Shuey (which is a rearrangement of the Aki-Richards equation) and 2-term Shuey approximations are widely used. These forward modeling equations or, in more modern methods, the Zoeppritz equations, form the basis for modeling in many seismic AVO inversion methods in use today, as further detailed in the references cited above.

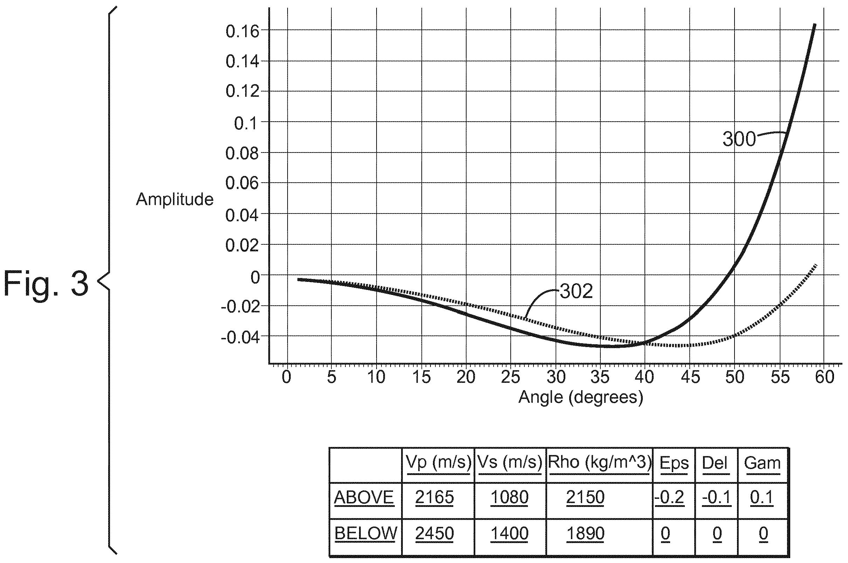

To further expand the application of AVO methods requires the use of a more practical model than those described above. One important extension is to take into account anisotropy. Anisotropy can seriously affect AVO amplitudes, as demonstrated in Figure 3. Figure 3 illustrates, for the example of azimuthal anisotropy, the effect that anisotropy can have on seismic reflection coefficient amplitudes. Specifically, Figure 3 shows the modeled amplitude response of a plane wave incident on a horizontal interface between two layers with and without incorporating HTI anisotropy. The seismic reflection amplitudes are shown as a function of angle (in degrees). The solid curve 300 (anis) shows the analytic (exact) reflection coefficient response for a plane wave reflecting from a single, horizontal interface for the case of azimuthal anisotropy and incident and reflected pressure wave. For comparison, the dashed curve 302 (iso) shows the exact solution for the isotropic reflection coefficients. The elastic and anisotropy parameters of the layer above and the layer below the interface are specified in the table of Figure 3, where Vp is the pressure wave velocity in m/s, Vs is the shear wave velocity in m/s, Rho is the density in kg/m3 and eps, del and gam are the Thomsen anisotropy parameters e, $\delta$ and $\gamma$ respectively.

In this example the properties in the layer above are for an anisotropic shale and those for the layer below are for a water-charged sand that is assumed isotropic. The example clearly shows the effect that anisotropy can have on the seismic amplitudes.

One of the objectives of these embodiments is to define a new class of earth parameters derived from the anisotropy parameters and the elastic parameters, termed anisotropic elastic parameters, for azimuthal anisotropy, such that the effects of azimuthal anisotropy can be modeled to an acceptable level of accuracy when using these parameters in the isotropic modeling of anisotropic seismic data.

This procedure is first illustrated for the case of polar anisotropy for p-wave sources and receivers, extended to include azimuthal anisotropy, and then generalized. The books by Rüger, A., 2002, "Reflection Coefficients and Azimuthal AVO Analysis in Anisotropic Media", Geophysical Monograph Series No. 10, Society of Exploration Geophysicists; and Thomsen, L., 2002, "Understanding Seismic Anisotropy in Exploration and Exploitation", Distinguished Instructor Series No. 5, Society of Exploration Geophysicists/European Association of Geoscientists and Engineers describe how to incorporate anisotropy in AVO modeling. They generalize the above isotropic model to model plane wave reflection in case of anisotropic media. Analogous to the approximation of the Zoeppritz equations by the 3-term Aki-Richards or Shuey equations, they show that for the AVO plane wave reflection coefficients for a flat interface bounded by anisotropic half spaces, a convenient approximation to the AVO relationship can be obtained. The 3-term expression they derive is:

$$R_p(\theta) = R_0 + R_2\sin^2\theta + R_4\sin^2\theta\tan^2\theta \qquad (1)$$

providing the three reflectivity terms for vertical transverse isotropic (VTI) media:

$$R_0 = \frac{1}{2}\frac{\Delta Z_p}{\overline{Z}_p}$$

$$R_2 = \frac{1}{2}\left\{\frac{\Delta V_p}{\overline{V}_p} - \left(\frac{2\overline{V}_s}{\overline{V}_p}\right)^2\frac{\Delta G}{\overline{G}} + \Delta\delta\right\}$$

$$R_4 = \frac{1}{2}\left\{\frac{\Delta V_p}{\overline{V}_p} + \Delta\epsilon\right\}$$

and also the three reflectivity terms for horizontal transverse isotropic (HTI) media:

$$R_0 = \frac{1}{2}\frac{\Delta Z_p}{\overline{Z}_p}$$

$$R_2 = \frac{1}{2}\left[\frac{\Delta V_p}{\overline{V}_p} - \left(\frac{2\overline{V}_s}{\overline{V}_p}\right)^2\frac{\Delta G}{\overline{G}} + \left\{\Delta\delta + 8\left(\frac{\overline{V}_s}{\overline{V}_p}\right)^2\Delta\gamma\right\}\cos^2(\omega - \phi)\right]$$

$$R_4 = \frac{1}{2}\left[\frac{\Delta V_p}{\overline{V}_p} + \Delta\epsilon\cos^4(\omega - \phi) + \Delta\delta\sin^2(\omega - \phi)\cos^2(\omega - \phi)\right]$$

with:

$R_p(\theta)$ being the p-wave reflection coefficient for incident angle $\theta$,
$\overline{Z}_p$, $\overline{V}_p$, $\overline{V}_s$ and $\overline{G}$ being the average acoustic impedance, p-wave velocity, s-wave velocity and vertical shear modulus ($G = \rho V_s^2$) respectively;
$\Delta Z_p$, $\Delta V_p$, $\Delta V_s$ and $\Delta G$ being the acoustic impedance, p-wave velocity, s-wave velocity, and vertical shear modulus contrasts respectively;
$\omega$ being the azimuth of the source-receiver pair in the seismic acquisition;
$\phi$ being the azimuth of the symmetry axis of the HTI media perpendicular to the laminations (see Figure 2(b)); and
$\Delta\epsilon$, $\Delta\delta$ and $\Delta\gamma$ being the Thomsen anisotropy parameters contrasts, respectively. It should be noted that by rotating a VTI medium 90° to an HTI medium, by definition the Thomsen parameter $\Delta\epsilon$ becomes $-\Delta\epsilon$. These equations correspond to the analogous equations for the isotropic case when the anisotropy constants are 0.

The next step is to derive the desired anisotropic elastic parameters, which are denoted by a prime (') accent.

Starting with the $R_4$ term, the anisotropic elastic parameter contrast $\Delta V'_p / \overline{V}'_p$ is defined as:

$$\frac{\Delta V'_p}{\overline{V}'_p} = \frac{\Delta V_p}{\overline{V}_p} + \Delta\epsilon \tag{2a}$$

for VTI media and

$$\frac{\Delta V'_p}{\overline{V}'_p} = \frac{\Delta V_p}{\overline{V}_p} + (\Delta\epsilon - \Delta\delta)\cos^4(\omega - \phi) + \Delta\delta\cos^2(\omega - \phi) \tag{2a'}$$

for HTI media.

Then, substituting into the $R_0$ term and using the small contrast expansion of the impedance product term gives:

$$\frac{\Delta\rho\prime}{\overline{\rho}'} = \frac{\Delta\rho}{\rho} - \Delta\epsilon \tag{2b}$$

for VTI media and

$$\frac{\Delta\rho'}{\overline{\rho}'} = \frac{\Delta\rho}{\overline{\rho}} - (\Delta\epsilon - \Delta\delta)\cos^4(\omega - \phi) - \Delta\delta\cos^2(\omega - \phi) \tag{2b'}$$

for HTI media.

Finally, defining $K = (\overline{V}_s/\overline{V}_p)^2$, substitution into the $R_2$ gives:

$$\frac{\Delta V'_s}{\overline{V}'_s} = \frac{\Delta V_s}{\overline{V}_s} + \frac{(4K+1)\Delta\epsilon}{8K} - \frac{\Delta\delta}{8K} \tag{2c}$$

for VTI media and

$$\frac{\Delta V'_s}{\overline{V}'_s} = \frac{\Delta V_s}{\overline{V}_s} + \frac{(4K+1)(\Delta\epsilon-\Delta\delta)}{8K}\cos^4(\omega - \phi) + \left(\frac{\Delta\delta}{2} - \Delta\gamma\right)\cos^2(\omega - \phi) \tag{2c'}$$

for HTI media.

Back substituting these anisotropic elastic parameters in the isotropic equivalent of equation (1) (anisotropy contrasts set to 0) shows that equation (1) is exactly recovered.

Thus, expressions are obtained for the anisotropic elastic parameter contrasts. These expressions are composed of a mixture of relative elastic parameter and absolute anisotropy parameter contrasts. In practice, it is advantageous to recover rock properties rather than their relative contrasts. In the current form, to recover the absolute quantities $V'_p$, $V'_s$ and $\rho'$ from the above relative contrasts requires integration. This can introduce low frequency drift and requires some absolute reference. It is preferable to find functions that modify $V_p$, $V_s$ and $\rho$ on a point-by-point basis, but in such a way that the expressions (2a-c) are recovered or at least closely approximated.

A close approximation can be obtained by approximating the contrast terms of the anisotropy parameters with new parameters that can be expressed as relative contrasts. One way this can be achieved is with the following expression:

$$\epsilon_r = \epsilon + 1 - \overline{\epsilon}$$

The validity of the approximation is verified by calculating the relative contrast of $\epsilon_r$.
Taking into account $\epsilon \ll 1$ we see that:

$$\frac{\Delta\epsilon_r}{\overline{\epsilon_r}} \approx \Delta\epsilon$$

The same holds true for $\delta$ and $\gamma$. When multiple layers are considered, the average can be taken over the set of layers. Substituting in equation (2a) gives:

$$\frac{\Delta V_p'}{\overline{V_p'}} = \frac{\Delta V_p}{\overline{V_p}} + \frac{\Delta\epsilon_r}{\overline{\epsilon_r}}$$

This is the differential approximation for a product term broken down into the addition of differential components. Hence for small contrasts:

$$V_p' = \epsilon_r V_p \tag{3a}$$

for VTI media and

$$V_p' = \delta_r^{\cos^2(\omega-\phi)} \left(\frac{\epsilon_r}{\delta_r}\right)^{\cos^4(\omega-\phi)} V_p \tag{3a'}$$

for HTI media.
In the same manner, equation (2b) gives:

$$\rho' = \epsilon_r^{-1} \rho \tag{3b}$$

for VTI media and equation (2b')

$$\rho' = \delta_r^{-\cos^2(\omega-\phi)} \left(\frac{\epsilon_r}{\delta_r}\right)^{-\cos^4(\omega-\phi)} \rho \tag{3b'}$$

for HTI media.
Further, equation (2c) gives:

$$V_s' = \epsilon_r^{(4K+1)/8K} \delta_r^{-1/8K} V_s \tag{3c}$$

for VTI media and equation (2c')

$$Vs' = \left(\delta_r^{0.5}/\gamma_r\right)^{\cos^2(\omega-\varphi)} (\epsilon_r/\delta_r)^{((4K+1)/8K)\cos^4(\omega-\varphi)} Vs \tag{3c'}$$

for HTI media.
Analyzing the equations (3a'-3c') certain observations of interest can be noted. For example, P-impedance, being the product of $V_p$ and $\rho$ is invariant for anisotropy. Secondly, for HTI media and azimuthal anisotropy, in the direction orthogonal to the anisotropy axis, where $(\omega - \phi) = 90°$, the HTI equations reduce to the isotropic case. Thirdly, for HTI media and azimuthal anisotropy, in the direction parallel to the anisotropy axis, where $\omega = \phi$, the HTI equations equate to the VTI equations where $\Delta\gamma = 0$ or $\gamma_r = 1$. Lastly, for a parameterization in P-impedance ($I_p$), S-impedance ($I_s$) and density ($\rho$), typical for seismic inversion, the HTI equations (3a'-3c') reduce to:

$$I'_p = I_p$$

$$I'_s = \left(\delta_r{}^{0.5} * \gamma_r\right)^{-\cos^2(\omega - \varphi)} (\varepsilon_r / \delta_r)^{((1-4K)/8K)\cos^4(\omega - \varphi)} I_s$$

$$\rho' = \delta_r^{-\cos^2(\omega - \phi)} (\epsilon_r / \delta_r)^{-\cos^4(\omega - \phi)} \rho$$

From the foregoing observations it can further be noted that (a) pre-stack inversion of seismic data from VTI or HTI media will result in an $I_p$ that is invariant and matches the well log measurement, that the equations for the isotropic case and the VTI equations are a subset of the HTI equations, and that inversion algorithms are generally parameterized in $I_p$, $I_s$ and $\rho$, not in $V_p$, $V_s$ and $\rho$.

It should be noted that for convenience the function:

$$\epsilon_r = \epsilon + 1 - \bar{\epsilon} \qquad\qquad (4)$$

can also be used in the above, and, analogously, the same for $\delta_r$ and $\gamma_r$. This has the advantage that the anisotropic elastic parameters are scaled such that when $\epsilon$, $\delta$ and $\gamma$ equal 0, they are equal to the input elastic parameters. In comparative data analysis, this nicely emphasizes zones with anisotropy.

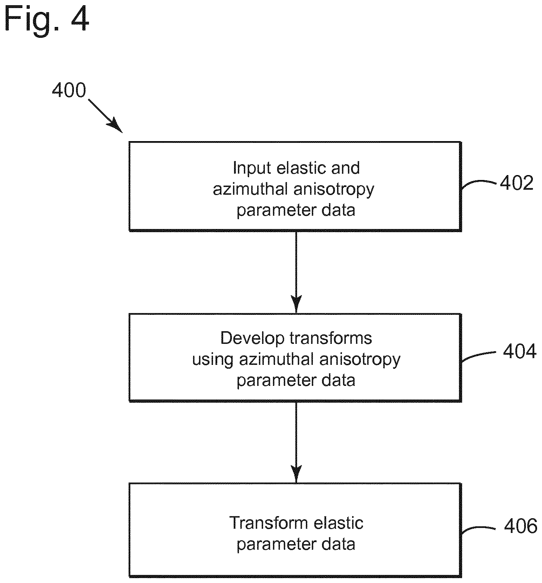

Figure 4 is a flow chart illustrating the process of one embodiment 400 for deriving azimuthal anisotropic elastic parameters. Step 402 represents obtaining the earth elastic parameter data and the azimuthal anisotropy parameter data for an object or imaged area (layer) of interest to use as inputs to the foregoing equations, i.e., data including values for Input $V_p$, $V_s$, $\rho$, $\varepsilon$, $\delta$, y, $\omega$, $\phi$. The anisotropy information can be obtained at step 402 by, for example, seismic data processing, where offset and azimuth dependent time shifts are indicative of changes in the propagation velocity. Additionally, at the position of the borehole, one can perform additional seismic experiments to specifically recover HTI and VTI parameters. Such experiments are known as walk-away and walk-around VSP (Vertical Seismic Profiling).

In step 404 the transforms are developed, e.g., as shown in Equations 3a', 3b' and 3c', and in step 406 the developed transforms are applied to generate the azimuthal anisotropic elastic parameters, e.g., values for $V_p'$, $V_s'$ and $\rho'$ or $I_p'$, $I_s'$ and $\rho'$ as described above. In more detail, step 406 includes transforming the earth elastic parameter data based on the azimuthal anisotropy parameter data to obtain anisotropic elastic parameter data. The output of step 406, i.e., the azimuthal anisotropic elastic parameter data, may be applied to at least one of the following methods: isotropic seismic modeling method, an isotropic seismic analysis and interpretation method, an isotropic seismic wavelet estimation method, an isotropic seismic inversion method, or an isotropic method for analysis and interpretation of inversion results.

The method 400 may also include the step of substituting the azimuthal anisotropic elastic parameter data for isotopic elastic parameters during isotopic seismic modeling method to synthesize anisotropic seismic data. Additionally, the synthesized anisotropic seismic data may be used in an isotropic seismic analysis and interpretation method for analysis and interpretation of anisotropic seismic data. Accordingly, the azimuthal anisotropic elastic parameter data may be substituted for the isotropic elastic parameters in any of the above-mentioned methods.

Another embodiment is directed to a method for approximating anisotropic seismic modeling by applying isotropic seismic modeling. The method includes an initial step of inputting earth elastic parameter data and earth anisotropy parameter data for an area of interest. Next, the earth elastic parameter data is transformed to obtain anisotropic elastic parameter data based on the earth anisotropy parameter data. Isotropic seismic modeling is then applied on the transformed anisotropic elastic parameter data. The resulting modeled anisotropic seismic data is an approximation of seismic data obtained by a corresponding anisotropic seismic modeling. The processed anisotropic seismic data is then output.

The method may further include a step of substituting the anisotropic elastic parameter data for isotropic elastic parameter data to synthesize the anisotropic seismic data. The synthesized anisotropic seismic data may be used in an isotropic analysis and interpretation method for analysis and interpretation of the anisotropic seismic data. The area of interest may be imaged by acquisition of borehole data, wide azimuth (WAZ) data, three-dimension (3-D) earth models, or four-dimensional (4-D) earth models. This step of transforming may further include applying appropriate transform functions that convert the earth elastic parameter data and earth anisotropy parameter data to the anisotropic elastic parameter data.

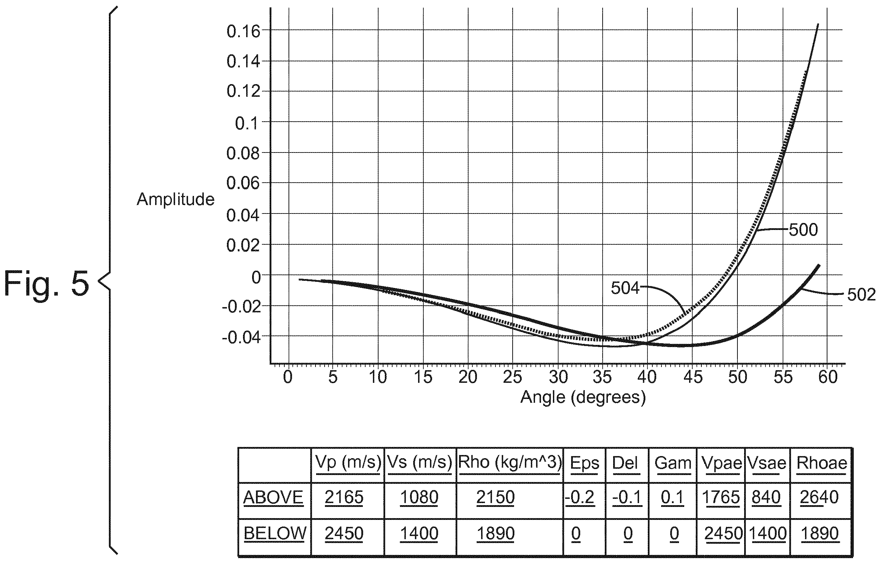

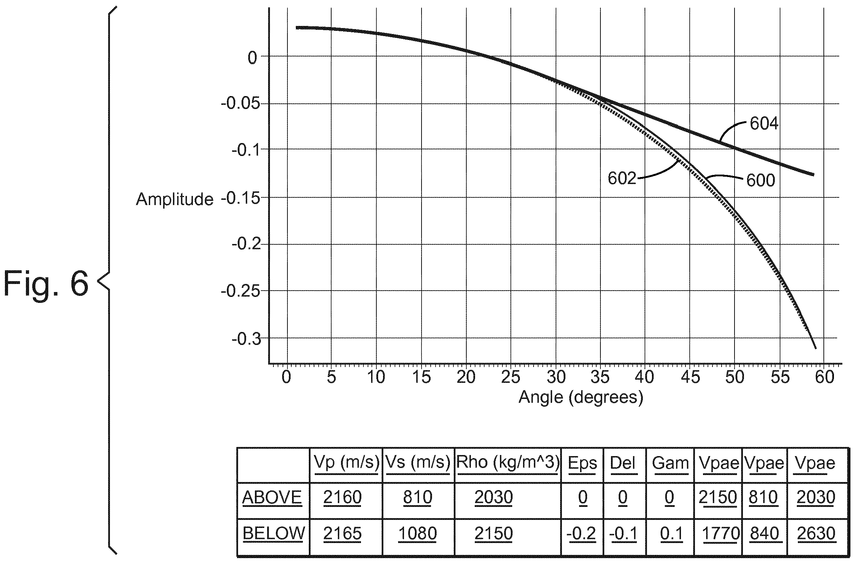

Figure 5 and Figure 6 illustrate modeling results for two different sets of rock property data, that exhibit relatively strong anisotropy contrasts. Figure 5 illustrates the effect, using the same model as for Figure 3, of using the 3-term approximation for the Zoeppritz equations described above, wherein the curve 500 the anisotropic response and curve 502 shows the isotropic response.. In addition, the dotted curve 504 shows the result of isotropic modeling with the anisotropic elastic parameters specified in the table, where Vpae, Vsae and Rhoae are the anisotropic elastic pressure wave velocity, shear wave velocity and density, respectively, calculated from the transform expressions (3) and using the normalization equation (4). The results show that isotropic modeling with the anisotropic elastic parameters closely approximates anisotropic modeling. Figure 6 illustrates the same results as in Figure 5, but for another case. In this example the properties in the layer above are for isotropic brine-charged sand and in the layer below are for anisotropic shale. Thus, curve 600 shows the anisotropic response, curve 602 shows the isotropic response and curve 604 shows the response with isotropic modeling with anisotropic elastic parameters. Again, the results illustrate that isotropic modeling with the anisotropic elastic parameters closely approximates anisotropic modeling.

Modeling with the above equations clearly supports that, even in these cases, the approximation of anisotropic modeling by using the newly defined anisotropic elastic parameters in isotropic modeling is accurate.

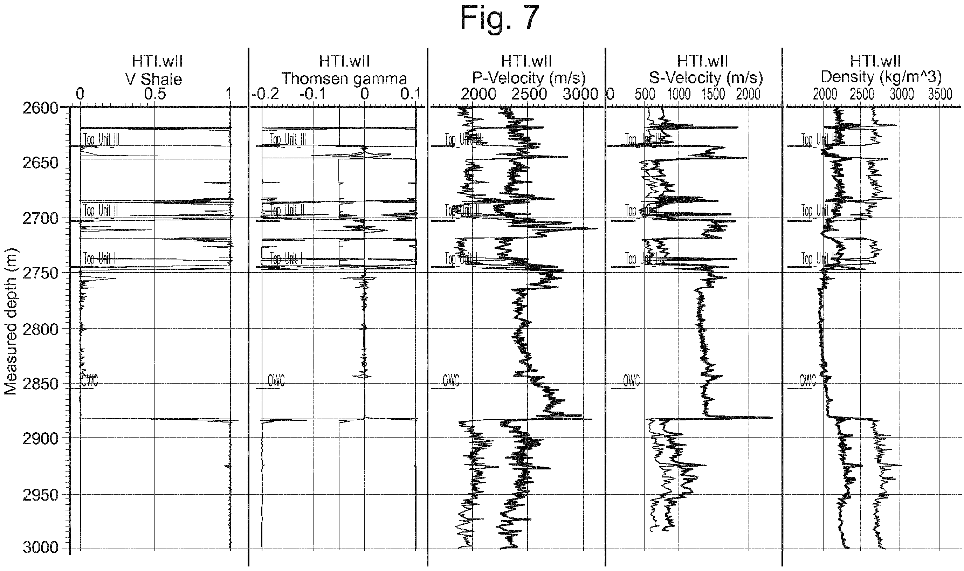

Figure 7 shows panels with borehole log data to demonstrate the effect of transforming elastic parameters to anisotropic elastic parameters for the case of azimuthal anisotropy and incident and reflecting pressure waves. Figure 7 illustrates a suite of borehole logs with pressure ($V_p$) and shear wave velocity ($V_s$) and density (Rho) elastic parameters, the corresponding anisotropic elastic parameters for azimuthal anisotropy and incident and reflecting pressure waves, the shale volume log (Vshale) and logs of $\varepsilon_r$ and $\delta_r$. The normalization of equation (4) has been applied to achieve that the anisotropic elastic parameters are equal to the elastic parameters in the pure sand sections (where the shale volume is zero), for example, between Top Unit II and Top Unit I.

The above derivation is based on the 3-term approximations to the exact isotropic and exact anisotropic modeling solutions for the plane wave, single horizontal interface model. In practice this may not be the desirable model as different situations in regards to the generation of anisotropic elastic parameters can occur, for example, to handle the following: azimuthal anisotropy for p-wave data; different types of anisotropy for shear and converted wave seismic data; use of the exact equations rather than the 3-term approximation; and use of more complex modeling methods.

Rüger, A., 2002, "Reflection Coefficients and Azimuthal AVO Analysis in Anisotropic Media", Geophysical Monograph Series No. 10, Society of Exploration Geophysicists demonstrates that, for the plane wave, horizontal interface model, for different types of anisotropy and wave types (pressure shear and converted) the exact solution can be approximated by 3-term equations similar in form to equation (1). Following the derivation procedure above leads to the conclusion that, when using the 3-term equations, the solutions for each of the anisotropic elastic parameters take the general form:

$$E' = \varepsilon_r^x \delta_r^y \gamma_r^z E \qquad\qquad (5)$$

where E is any of the elastic parameters and x, y and z are constants that may be a function of K. It should be noted that constants x, y and z will generally differ for each of the elastic parameters, for each type of anisotropy and for each wave type (pressure, shear and converted wave). It is also noted that the $\overline{\varepsilon, \delta}$ and $\overline{\gamma}$ averages are part of the formula. When multiple layers are considered, it can be advantageous to also consider these averages as parameters.

In this way transform functions are obtained that have parameters that control the transform. In some cases appropriate values for these transform parameters can be obtained analytically. However, in another embodiment, an iterative procedure can also be readily followed to obtain the appropriate values for the transform parameters. This results in further important benefits such as: the exact modeling methods rather than the 3-term approximations can be used as reference for the case of the simple single flat interface model, or more complex modeling methods can be applied; and other transform functions with other functional forms and with other transform parameters than equation (5) can be applied to evaluate if a better approximation can be obtained.

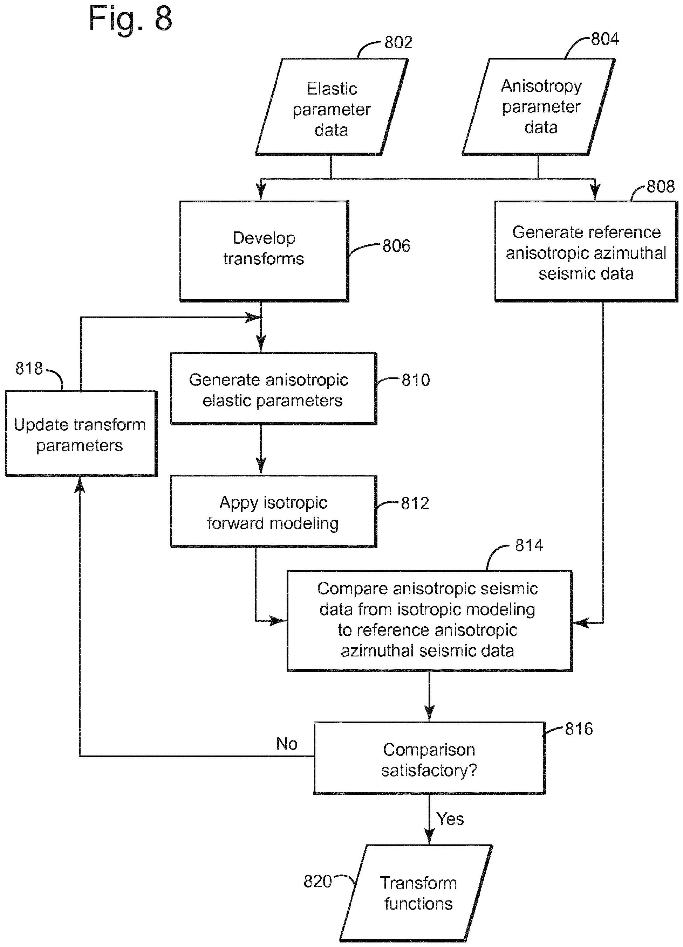

The steps in such an iterative procedure according to an embodiment are further illustrated in the flow chart of Figure 8. Initially, steps 802 and 804 refer to the input of elastic parameter data and anisotropic parameter data, respectively, which can be obtained as previously described with respect to step 402. In step 808, synthetic azimuthal anisotropic seismic amplitude data is generated using an appropriate azimuthal anisotropic forward modeling method selected on such criteria as the type(s) of anisotropy, wave type(s), model complexity and modeling accuracy. Such data is referred to herein as reference azimuthal anisotropic seismic amplitude data.

In step 806, transform functions are developed to transform the earth elastic and anisotropy parameters to anisotropic elastic parameters. It can be assumed that the transform functions have certain parameters (the transform parameters) that may be modified. A first set of transform functions may be developed by using some set of initial transform parameters. Anisotropic elastic parameters are then generated in step 810 by applying the transforms, e.g., the same or similar as those described above with respect to Equations 3a', 3b' and 3c', to the elastic parameter data. Next, in step 812, isotropic forward modeling is applied with the anisotropic elastic parameters using the isotropic equivalent of the anisotropic forward modeling method used in step 808 to generate anisotropic seismic data. This equivalence can generally be achieved by setting the anisotropy parameters to 0 (or constant) in the anisotropic forward modeling method. The anisotropic seismic data generated by isotropic modeling with the anisotropic elastic parameters is then compared with the reference anisotropic seismic amplitude data in step 814. In step 816, the comparison is judged. If the comparison from step 816 is not satisfactory, then the parameters of the transform functions are updated in step 818, e.g., the direction of the anisotropy axis and the Thomsen parameters, and the transform functions of step 806 are modified accordingly. The decision made in block 816 can, for example, be performed based on an analysis of the HTI data with the WAZ seismic (and synthetic) data which is measuring all of the azimuth directions since the HTI has an isotropic plane that should match the well control and an anisotropic plane orthogonal to the isotropic plane which permits the derivation of the anisotropy, azimuth and the elastic properties. Steps 810-818 are repeated until a satisfactory match is obtained. If the comparison at step 816 is satisfactory, then the set of transform functions is produced in step 820.

The output of the method of this embodiment is a set of transform functions calibrated for the particular anisotropic forward modeling method selected. The generated isotropic elastic parameters as well as the anisotropy parameters may also be output, as may the synthesized anisotropic seismic data. The forward modeling method referred to in step 608 may be a method for a two-layer (one interface) earth model, or may be a method for multiple layers, or may be a method for a fully inhomogeneous earth. In the last two cases the modeling and comparison may be carried out over a limited interval of interest. The modification in step 818 to a fit-for-purpose level of accuracy may be done automatically using an optimization method, or interactively or in combination. Instead of in step 812 using the anisotropic forward modeling method, the equivalent isotropic forward modeling method may also be used.

It is recognized that in the method utilizing an iterative procedure to find satisfactory transform parameters the functional form of the transforms is set in the transform development step. If a satisfactory comparison is not achieved after sufficient iterations, alternative transform functions may be evaluated.

The proposed anisotropic elastic parameter transform expressions achieve the objective that the anisotropic elastic parameters are straightforwardly obtained by a point-by-point transform of the elastic parameters. An important implication is that, to handle anisotropy, all available isotropic AVO methods for such applications as seismic modeling, wavelet estimation, the inversion and analysis and interpretation of inversion results, and the analysis and interpretation of seismic amplitude data can continue to be applied simply by replacing the isotropic elastic parameters by the above-defined anisotropic elastic parameters at the appropriate points in these methods. Within these methods the transforms will typically be applied to wide azimuth data with the data points in those data sets representing earth elastic and anisotropy parameters at some spatial location or locations in the earth. It is noted that such representations allow for specification of the vertical location in terms of seismic travel time or in distance or depth.

In the above, a method is derived to obtain anisotropic elastic parameters using point-by-point transforms. This is convenient, but is not a difficult requirement. Anisotropic elastic parameters can also be obtained by integration of the contrast expressions such as equation (1). This may result in improved accuracy, as the conversion of the anisotropy parameters to relative contrasts is not needed. However, this gain may be offset by the practical observation that integration can introduce low frequency drift and requires handling of the integration constant. This may not impact further use of the anisotropic elastic parameters, for example, in certain band-limited seismic modeling and inversion methods where these effects are removed in the method. Hence, these are examples where anisotropic elastic parameters obtained by integration can be effectively used. In fact, in certain of these methods band-limited anisotropic elastic parameters can be used.

An alternative method is to combine anisotropic elastic parameters obtained by an integration procedure with the anisotropic elastic parameters obtained with the point-by-point transforms. This can be achieved by replacing the low frequency part of the result obtained by the integration procedure with the equivalent part obtained with the point-by-point transforms.

The transform parameters, such as x, y and z can be a function of depth or lateral position in the earth. For example, the above analytic derivation shows that these transform parameters may be a function of K. It is well known that K varies spatially in the earth. In the proposed method the transform parameters are assumed constant when a single interface is used for deriving the transforms or are assumed constant over the study interval of interest. When these transforms are applied over longer intervals or areas, this may lead to a loss to of accuracy. This same issue occurs in conventional seismic AVO analysis, as for example discussed in Fatti, J. L., Smith, G. C., Vail, P. J., Strauss, P. J. and Levitt, P. R., 1994, "Detection of gas in sandstone reservoirs using AVO analysis: A 3D seismic case history using the Geostack technique", Geophysics, vol. 59, no. 9, pp. 1362-1376. Allowing laterally and vertically varying trends in the variables overcomes this problem, where a trend constitutes a spatially varying variable such that its bandwidth is lower than that of the seismic data. The same method can be used for anisotropic elastic parameters by allowing these parameters to take the form of laterally and vertically varying trends.

Embodiments are also directed to a device for anisotropic processing of earth elastic parameter data and the application of processed data. The device includes a first input means for inputting earth elastic parameter data of an area of interest; a second input means for inputting earth anisotropy parameter data of the area of interest; a transform means for transforming, based on the input earth anisotropy parameter data, the input earth elastic parameter data to obtain anisotropic elastic parameter data; a processor for applying the anisotropic elastic parameter data in at least one of the following methods: 1) an isotropic seismic modeling method; 2) an isotropic seismic analysis and interpretation method; 3) an isotropic seismic wavelet estimation method; 4) an isotropic seismic inversion method; and 5) an isotropic method for the analysis and interpretation of inversion results; and an output means for outputting the processed anisotropic elastic parameter data.

Another embodiment includes a device for approximating anisotropic seismic modeling by applying isotropic seismic modeling. The device includes a first input means for inputting earth elastic parameter data of an area of interest; a second input means for inputting earth anisotropy parameter data of the area of interest; a transform means for transforming, based on the input earth anisotropy parameter data, the input earth elastic parameter data to obtain anisotropic elastic parameter data; a processor for applying the isotropic seismic modeling on the transformed anisotropic elastic parameter data, the resulting modeled anisotropic seismic data being an approximation of the data obtained by a corresponding anisotropic seismic modeling; and an output means for outputting the processed anisotropic seismic data. anisotropy parameter data. An input/output unit 908 may be connected to the CPU 902 and may be of any conventional type, such as a monitor and keyboard, mouse, touchscreen, printer, and/or voice activated device. The computer system 900 runs a computer program to execute instructions for the CPU 902 to perform any of the methods of the embodiments described hereinabove. The computer system 900 is simply an example of one suitable computer system for the practice of the embodiments. Such computer systems are well understood by one of ordinary skill in the art. The computer program may be stored on a data carrier 910, such as a disk electronically connectable with the CPU 902, so as to allow the computer program when run on a computer to execute any of the methods described hereinabove.

The disclosed embodiments provide a server node, and methods for generation and application of anisotropic elastic parameters in HTI media. It should be understood that this description is not intended to limit the invention. Further, in the detailed description of the embodiments, numerous specific details are set forth in order to provide a comprehensive understanding of the invention. However, one skilled in the art would understand that various embodiments may be practiced without such specific details.

Although the features and elements of the present embodiments are described in the embodiments in particular combinations, each feature or element can be used alone without the other features and elements of the embodiments or in various combinations with or without other features and elements disclosed herein. The methods or flow charts provided in the present application may be implemented art would understand that various embodiments may be practiced without such specific details.

Although the features and elements of the present embodiments are described in the embodiments in particular combinations, each feature or element can be used alone without the other features and elements of the embodiments or in various combinations with or without other features and elements disclosed herein. The methods or flow charts provided in the present application may be implemented in a computer program, software, or firmware tangibly embodied in a computer-readable storage medium for execution by a general purpose computer or a processor.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A method for anisotropic processing of earth elastic parameter data associated with a horizontal transverse isotropy (HTI) anisotropic medium, said medium having vertically stratified layers relative to a source-receiver pair and comprising a principle anisotropy axis, the method comprising:

   acquiring seismic data for an area of interest that includes a layer of an HTI anisotropic medium having azimuthal anisotropic characteristics, using at least one source and receivers, ;
   obtaining earth elastic parameter data (802) associated with the area of interest;
   obtaining earth anisotropy parameter data (804) from said area of interest, using an azimuth of the source-receiver pair in the seismic acquisition and using an azimuth of the principle anisotropy axis of the HTI medium perpendicular to the layers ;
   developing transform functions (806) that transform the earth elastic and anisotropy parameter data into anisotropic elastic parameter data, based on the obtained earth anisotropy parameter data;
   applying (810) said transform functions to the earth elastic and anisotropy parameter data to obtain said anisotropic elastic parameter data.
   applying the anisotropic elastic parameter data in at least one seismic processing method to determine at least the probability of the absence or presence of hydrocarbon deposits.

2. The method of claim 1, further comprising: applying the anisotropic elastic parameter data in at least one seismic processing method selected from the group including: i) an isotropic seismic modeling method, ii) an isotropic seismic analysis and interpretation method, iii) an isotropic seismic wavelet estimation method, iv) an isotropic seismic inversion method, and v) an isotropic method for analysis and interpretation of inversion results to produce processed anisotropic elastic parameter data.

3. The method of claim 2, further comprising substituting the anisotropic elastic parameter data for isotropic elastic parameter data in the isotropic method for analysis and interpretation of inversion results.

4. The method of claim 1, wherein the area of interest is imaged using a wide azimuth seismic acquisition technique to obtain said elastic parameter data and said anisotropic parameter data.

5. The method of claim 1, wherein the transform functions are $E' = \epsilon_r^x \delta_r^y \gamma_r^z E$, wherein $\epsilon_r$, $\delta_r$ and $\gamma_r$ are anisotropy relative contrast parameters, $E'$ is an anisotropic elastic parameter, $E$ is the corresponding elastic parameter and $x$, $y$ and $z$ are constants.

6. The method of claim 1, wherein transforming elastic parameter data to anisotropic elastic parameter data is obtained by integration of anisotropic elastic parameter contrasts.

7. The method of claim 1, wherein the anisotropy parameter data are transformed to anisotropy relative contrast parameters such that relative contrasts of the transformed anisotropy parameters approximate the contrasts in the anisotropy parameter data.

8. The method of claim 1, further comprising:
applying isotropic seismic modeling on the transformed anisotropic elastic parameter data to produce anisotropic seismic data, the produced anisotropic seismic data being an approximation of seismic data obtained by anisotropic seismic modeling.

9. The method of claim 8, further comprising substituting the anisotropic elastic parameter data for isotropic elastic parameter data in isotropic seismic modeling to produce the anisotropic seismic data.

10. A system for anisotropic processing of earth elastic parameter data associated with a horizontal transverse isotropy (HTI) anisotropic medium, said medium having vertically stratified layers relative to a source-receiver pair and comprising a principle anisotropy axis, the system comprising:

at least one source and receivers operated to acquire seismic data for an area of interest that includes a layer of an HTI anisotropic medium having azimuthal anisotropic characteristics,;
at least one processor (902) configured to obtain earth elastic parameter data (802) associated with the area of interest, to obtain earth anisotropy parameter data (804) from said area of interest, using an azimuth of the source-receiver pair in the seismic acquisition and using an azimuth of the principle anisotropy axis of the HTI medium perpendicular to the layers, wherein the processor is further configured to develop transform functions (806, 810) that transform the earth elastic and anisotropy parameter data into anisotropic elastic parameter data, based on the obtained earth anisotropy parameter data, and to apply said transform functions to the earth elastic and anisotropy parameter data to obtain the anisotropic elastic parameter data;
wherein the at least one processor is further configured to apply the anisotropic elastic parameter data in at least one seismic processing method to determine at least the probability of the absence or presence of hydrocarbon deposits.

11. The system of claim 10, wherein the at least one processor is further configured to apply the anisotropic elastic parameter data in at least one seismic processing method selected from the group including: i) an isotropic seismic modeling method, ii) an isotropic seismic analysis and interpretation method, iii) an isotropic seismic wavelet estimation method, iv) an isotropic seismic inversion method, and v) an isotropic method for analysis and interpretation of inversion results to produce processed anisotropic elastic parameter data.

12. The system of claim 11, wherein the at least one processor is further configured to substituting the anisotropic elastic parameter data for isotropic elastic parameter data in the isotropic method for analysis and interpretation of inversion results.

13. The system of claim 10, wherein the area of interest is imaged using a wide azimuth seismic acquisition technique to obtain said elastic parameter data and said anisotropic parameter data.

14. The system of claim 10, wherein the transform functions are $E' = \epsilon_r^x \delta_r^y \gamma_r^z E$, wherein $\epsilon_r$, $\delta_r$ and $\gamma_r$ are anisotropy relative contrast parameters, $E'$ is an anisotropic elastic parameter, $E$ is the corresponding elastic parameter and *x, y* and *z* are constants.

15. The system of claim 10, wherein the at least one processor is further configured to apply isotropic seismic modeling on the transformed anisotropic elastic parameter data to produce anisotropic seismic data, the produced anisotropic seismic data being an approximation of seismic data obtained by anisotropic seismic modeling.

**Patentansprüche**

1. Verfahren zur anisotropischen Verarbeitung von erdelastischen Parameterdaten, die mit einem horizontalen transversal-isotropen (HTI)-anisotropischen Medium assoziiert sind, wobei das Medium vertikal geschichtete Schichten mit Bezug auf das Quellen-Empfänger-Paar umfasst und eine Hauptanisotropieachse aufweisen, wobei das Verfahren Folgendes umfasst:

Erfassen von seismischen Daten für einen bestimmten Bereich, der eine Schicht eines HTI-anisotropischen Mediums einschließt, umfassend azimuthale anisotropische Eigenschaften, unter Verwendung von mindestens einer Quelle und Empfängern;
Erhalten von erdelastischen Parameterdaten (802) die mit dem bestimmten Bereich assoziiert sind;
Erhalten von Erdanisotropie-Parameterdaten (804) von dem bestimmten Bereich unter Verwendung des Quellen-Empfänger-Paars bei der seismischen Erfassung und Verwendung eines Azimuths der Hauptanisotropieachse des HTI-Mediums senkrecht zu den Schichten;
Entwickeln von Umwandlungsfunktionen (806), die die erdelastischen und Anisotropie-Parameterdaten in anisotropische elastische Parameterdaten umwandeln, basierend auf den erhaltenen Erdanisotropie-Parameterdaten;
Anwenden (810) der Umwandlungsfunktionen auf die erdelastischen und Anisotropie-Parameterdaten, um die anisotropischen elastischen Parameterdaten zu erhalten
Anwenden der anisotropischen elastischen Parameterdaten in mindestens einem seismischen Verarbeitungsverfahren, um mindestens die Wahrscheinlichkeit der Abwesenheit oder der Anwesenheit von Kohlenwasserstoff-Lagerstätten zu bestimmen.

2. Verfahren nach Anspruch 1, weiter umfassend: Anwenden der anisotropischen elastischen Parameterdaten in mindestens einem seismischen Verarbeitungsverfahren, ausgewählt aus der Gruppe, einschließend: i) ein isotropisches seismisches Modellierungsverfahren, ii) ein isotropisches seismisches Analyse- und Interpretationsverfahren, iii) ein isotropisches seismisches Wavelet-Bestimmungsverfahren, iv) ein isotropisches seismisches Inversionsverfahren und v) ein isotropisches Verfahren zur Analyse und Interpretation von Inversionsergebnissen, um verarbeitete anisotropische elastische Parameterdaten zu erzeugen.

3. Verfahren nach Anspruch 2, weiter umfassend Ersetzen der anisotropischen elastischen Parameterdaten durch isotropische elastische Parameterdaten beim isotropischen Verfahren zur Analyse und Interpretation von Inversionsergebnissen.

4. Verfahren nach Anspruch 1, wobei der bestimmte Bereich unter Verwendung einer breiten Azimuth-seismischen Erfassungstechnik abgebildet wird, um die elastischen Parameterdaten und die anisotropischen Parameterdaten zu erhalten.

5. Verfahren nach Anspruch 1, wobei die Umwandlungsfunktionen $E' = \epsilon_r^x \delta_r^y \gamma_r^z E$ sind, wobei $\epsilon_r$, $\delta_r$ und $\gamma_r$ Anisotropie-bezogene Kontrastparameter sind, $E'$ ein anisotropischer elastischer Parameter ist, $E$ der entsprechende elastische Parameter ist, und *x, y und z* Konstanten sind.

6. Verfahren nach Anspruch 1, wobei das Umwandeln von elastischen Parameterdaten in anisotropische elastische Parameterdaten durch Integrieren von anisotropischen elastischen Parameterkontrasten erzielt wird.

7. Verfahren nach Anspruch 1, wobei die anisotropischen Parameterdaten in Anisotropie-bezogene Kontrastparameter umgewandelt werden, so dass sich relative Kontraste der umgewandelten Anisotropie-Parameter den Kontrasten in den Anisotropie-Parameterdaten annähern.

8. Verfahren nach Anspruch 1, weiter umfassend:
Anwenden von istotropischer seismischer Modellierung auf die umgewandelten anisotropischen elastischen Parameterdaten, um anisotropische seismische Daten zu produzieren, wobei die produzierten anisotropischen seismischen Daten eine Annäherung von seismischen Daten, erhalten durch anisotropische seismisches Modellierung, sind.

9. Verfahren nach Anspruch 8, weiter umfassend Ersetzen der anisotropischen elastischen Parameterdaten durch isotropische elastische Parameterdaten bei der isotropischen seismischen Modellierung, um anisotropische seismische Daten zu produzieren.

10. System zur anisotropischen Verarbeitung von erdelastischen Parameterdaten, die mit einem horizontalen transversal-isotropen (HTI)-anisotropischen Medium assoziiert sind, wobei das Medium vertikal geschichtete Schichten mit Bezug auf das Quellen-Empfänger-Paar aufweist und eine Hauptanisotropieachse umfasst, wobei das System Folgendes umfasst:

mindestens einer Quelle und Empfänger, die betrieben werden, um seismische Daten für einen bestimmten Bereich zu erfassen, der eine Schicht eines HTI-anisotropischen Mediums einschließt, aufweisend azimutale anisotropische Eigenschaften;
mindestens einen Prozessor (902), der konfiguriert ist, um erdelastische Parameterdaten (802) zu erhalten, die mit dem bestimmten Bereich assoziiert sind; um Erdanisotropie-Parameterdaten (804) von dem bestimmten Bereich unter Verwendung eines Azimuths des Quellen-Empfänger-Paars bei der seismischen Erfassung und unter Verwendung eines Azimuths der Hauptanisotropieachse des HTI-Mediums senkrecht zu den Schichten zu erhalten, wobei der Prozessor weiter konfiguriert ist:
um Umwandlungsfunktionen (806, 810) zu entwickeln, die die erdelastischen und Anisotropie-Parameterdaten in anisotropische elastische Parameterdaten umwandeln, basierend auf den erhaltenen Erdanisotropie-Parameterdaten; und die Umwandlungsfunktionen auf die erdelastischen und Anisotropie-Parameterdaten anzuwenden, um die anisotropischen elastischen Parameterdaten zu erhalten;
wobei der mindestens eine Prozessor weiter konfiguriert ist, um die anisotropischen elastischen Parameterdaten in mindestens einem seismischen Verarbeitungsverfahren anzuwenden, um mindestens die Wahrscheinlichkeit der Abwesenheit oder der Anwesenheit von Kohlenwasserstoff-Lagerstätten zu bestimmen.

11. System nach Anspruch 10, wobei der mindestens eine Prozessor weiter konfiguriert ist, um die anisotropischen elastischen Parameterdaten in mindestens einem seismischen Verarbeitungsverfahren anzuwenden, ausgewählt aus der Gruppe, einschließend: i) ein isotropisches seismisches Modellierungsverfahren, ii) ein isotropisches seismisches Analyse- und Interpretationsverfahren, iii) ein isotropisches seismisches Wavelet-Bestimmungsverfahren, iv) ein isotropisches seismisches Inversionsverfahren und v) ein isotropisches Verfahren zur Analyse und Interpretation von Inversionsergebnissen, um verarbeitete anisotropische elastische Parameterdaten zu erzeugen.

12. System nach Anspruch 11, wobei der mindestens eine Prozessor weiter konfiguriert ist, um die anisotropischen elastischen Parameterdaten durch isotropische elastische Parameterdaten beim isotropischen Verfahren zur Analyse und Interpretation von Inversionsergebnissen zu ersetzen.

13. System nach Anspruch 10, wobei der bestimmte Bereich unter Verwendung einer breiten Azimuth-seismischen Erfassungstechnik abgebildet wird, um die elastischen Parameterdaten und die anisotropischen Parameterdaten zu erhalten.

14. System nach Anspruch 10, wobei die Umwandlungsfunktionen $E' = \epsilon_r^x \delta_r^y \gamma_r^z E$ sind, wobei $\varepsilon_r$, $\delta_r$ und $\gamma_r$ Anisotropie-bezogene Kontrastparameter sind, $E'$ ein anisotropischer elastischer Parameter ist, $E$ der entsprechende elastische Parameter ist und $x$, $y$ und $z$ Konstanten sind.

15. System nach Anspruch 10, wobei der mindestens eine Prozessor weiter konfiguriert ist, um die isotropische seismische Modellierung auf die umgewandelten anisotropischen elastischen Parameterdaten anzuwenden, um anisotropische seismische Daten zu produzieren, wobei die produzierten anisotropischen seismischen Daten eine Annäherung von seismischen Daten, erhalten durch anisotropische seismische Modellierung, sind.

**Revendications**

1. Procédé de traitement anisotrope de données de paramètres d'élasticité terrestre associées à un milieu anisotrope à isotropie transverse horizontale (HTI), ledit milieu présentant des couches stratifiées verticalement relativement à une paire « source-récepteur » et comprenant un axe d'anisotropie principal, le procédé comprenant les étapes suivantes :

   acquérir des données sismiques pour une zone d'intérêt qui inclut une couche d'un milieu anisotrope à isotropie HTI présentant des caractéristiques anisotropes azimutales, en utilisant au moins une source et des récepteurs ;
   obtenir des données de paramètres d'élasticité terrestre (802) associées à la zone d'intérêt ;
   obtenir des données de paramètres d'anisotropie terrestre (804) à partir de ladite zone d'intérêt, en utilisant un azimut de la paire « source-récepteur » dans le cadre de l'acquisition de données sismiques, et en utilisant un azimut de l'axe d'anisotropie principal du milieu anisotrope à isotropie HTI perpendiculaire aux couches ;
   développer des fonctions de transformée (806) qui transforment les données de paramètres d'anisotropie et d'élasticité terrestre en des données de paramètres d'élasticité anisotrope, sur la base des données de paramètres d'anisotropie terrestre obtenues ;
   appliquer (810) lesdites fonctions de transformée aux données de paramètres d'anisotropie et d'élasticité terrestre en vue d'obtenir lesdites données de paramètres d'élasticité anisotrope ;
   appliquer les données de paramètres d'élasticité anisotrope dans le cadre d'au moins un procédé de traitement sismique en vue de déterminer au moins la probabilité d'absence ou de présence de dépôts d'hydrocarbures.

2. Procédé selon la revendication 1, comprenant en outre l'étape suivante :
   appliquer les données de paramètres d'élasticité anisotrope dans le cadre d'au moins un procédé de traitement sismique sélectionné à partir du groupe incluant : i) un procédé de modélisation sismique isotrope, ii) un procédé d'analyse et d'interprétation sismiques isotropes, iii) un procédé d'estimation d'ondelettes sismiques isotropes, iv) un procédé d'inversion sismique isotrope, et v) un procédé isotrope pour l'analyse et l'interprétation de résultats d'inversion en vue de produire des données de paramètres d'élasticité anisotrope traitées.

3. Procédé selon la revendication 2, comprenant en outre l'étape suivante :
   remplacer les données de paramètres d'élasticité anisotrope par des données de paramètres d'élasticité isotrope dans le cadre du procédé isotrope pour l'analyse et l'interprétation de résultats d'inversion.

4. Procédé selon la revendication 1, dans lequel la zone d'intérêt est imagée en utilisant une technique d'acquisition de données sismiques à grand azimut en vue d'obtenir lesdites données de paramètres d'élasticité et lesdites données de paramètres anisotropes.

5. Procédé selon la revendication 1, dans lequel les fonctions de transformée sont $E' = \epsilon_r^x \delta_r^y \gamma_r^z E$ , dans lequel « $\epsilon_r$ », « $\delta_r$ » et « $\gamma_r$ » sont des paramètres de contrastes relatifs d'anisotropie, « $E'$ » est un paramètre d'élasticité anisotrope, « $E$ » est le paramètre d'élasticité correspondant et « $x$ », « $y$ » et « $z$ » sont des constantes.

6. Procédé selon la revendication 1, dans lequel la transformation de données de paramètres d'élasticité en des données de paramètres d'élasticité anisotrope est obtenue par l'intégration de contrastes de paramètres d'élasticité anisotrope.

7. Procédé selon la revendication 1, dans lequel les données de paramètres d'anisotropie sont transformées en des paramètres de contrastes relatifs d'anisotropie, de sorte que les contrastes relatifs des paramètres d'anisotropie transformés se rapprochent des contrastes dans les données de paramètres d'anisotropie.

8. Procédé selon la revendication 1, comprenant en outre l'étape suivante :
   appliquer une modélisation sismique isotrope aux données de paramètres d'élasticité anisotrope transformées en vue de produire des données sismiques anisotropes, les données sismiques anisotropes produites correspondant à une approximation de données sismiques obtenues par la modélisation sismique anisotrope.

9. Procédé selon la revendication 8, comprenant en outre l'étape suivante :
   remplacer les données de paramètres d'élasticité anisotrope par des données de paramètres d'élasticité isotrope dans le cadre de la modélisation sismique isotrope en vue de produire les données sismiques anisotropes.

**10.** Système de traitement anisotrope de données de paramètres d'élasticité terrestre associées à un milieu anisotrope à isotropie transverse horizontale (HTI), ledit milieu présentant des couches stratifiées verticalement relativement à une paire « source-récepteur » et comprenant un axe d'anisotropie principal, le système comprenant :

au moins une source et des récepteurs exploités de manière à acquérir des données sismiques pour une zone d'intérêt qui inclut une couche d'un milieu anisotrope à isotropie HTI présentant des caractéristiques anisotropes azimutales ;

au moins un processeur (902) configuré de manière à obtenir des données de paramètres d'élasticité terrestre (802) associées à la zone d'intérêt, à obtenir des données de paramètres d'anisotropie terrestre (804) à partir de ladite zone d'intérêt, en utilisant un azimut de la paire « source-récepteur » dans le cadre de l'acquisition de données sismiques, et en utilisant un azimut de l'axe d'anisotropie principal du milieu anisotrope à isotropie HTI perpendiculaire aux couches, dans lequel le processeur est en outre configuré de manière à développer des fonctions de transformée (806, 810) qui transforment les données de paramètres d'anisotropie et d'élasticité terrestre en des données de paramètres d'élasticité anisotrope, sur la base des données de paramètres d'anisotropie terrestre obtenues, et à appliquer lesdites fonctions de transformée aux données de paramètres d'anisotropie et d'élasticité terrestre en vue d'obtenir les données de paramètres d'élasticité anisotrope ;

dans lequel ledit au moins un processeur est en outre configuré de manière à appliquer les données de paramètres d'élasticité anisotrope dans le cadre d'au moins un procédé de traitement sismique en vue de déterminer au moins la probabilité d'absence ou de présence de dépôts d'hydrocarbures.

**11.** Système selon la revendication 10, dans lequel ledit au moins un processeur est en outre configuré de manière à appliquer les données de paramètres d'élasticité anisotrope dans le cadre d'au moins un procédé de traitement sismique sélectionné à partir du groupe incluant : i) un procédé de modélisation sismique isotrope, ii) un procédé d'analyse et d'interprétation sismiques isotropes, iii) un procédé d'estimation d'ondelettes sismiques isotropes, iv) un procédé d'inversion sismique isotrope, et v) un procédé isotrope pour l'analyse et l'interprétation de résultats d'inversion en vue de produire des données de paramètres d'élasticité anisotrope traitées.

**12.** Système selon la revendication 11, dans lequel ledit au moins un processeur est en outre configuré de manière à remplacer les données de paramètres d'élasticité anisotrope par des données de paramètres d'élasticité isotrope dans le cadre du procédé isotrope pour l'analyse et l'interprétation de résultats d'inversion.

**13.** Système selon la revendication 10, dans lequel la zone d'intérêt est imagée en utilisant une technique d'acquisition de données sismiques à grand azimut en vue d'obtenir lesdites données de paramètres d'élasticité et lesdites données de paramètres anisotropes.

**14.** Système selon la revendication 10, dans lequel les fonctions de transformée sont $E' = \epsilon_r^x \delta_r^y \gamma_r^z E$, dans lequel « $\epsilon_r$ », « $\delta_r$ » et « $\gamma_r$ » sont des paramètres de contrastes relatifs d'anisotropie, « $E'$ » est un paramètre d'élasticité anisotrope, « $E$ » est le paramètre d'élasticité correspondant et « $x$ », « $y$ » et « $z$ » sont des constantes.

**15.** Système selon la revendication 10, dans lequel ledit au moins un processeur est en outre configuré de manière à appliquer une modélisation sismique isotrope aux données de paramètres d'élasticité anisotrope transformées en vue de produire des données sismiques anisotropes, les données sismiques anisotropes produites correspondant à une approximation de données sismiques obtenues par la modélisation sismique anisotrope.

# Fig. 1

EP 3 028 071 B1

# Fig. 2(a)

# Fig. 2(b)

EP 3 028 071 B1

Fig. 3

| | Vp (m/s) | Vs (m/s) | Rho (kg/m^3) | Eps | Del | Gam |
|---|---|---|---|---|---|---|
| ABOVE | 2165 | 1080 | 2150 | -0.2 | -0.1 | 0.1 |
| BELOW | 2450 | 1400 | 1890 | 0 | 0 | 0 |

# Fig. 4

400

Input elastic and
azimuthal anisotropy
parameter data — 402

Develop transforms
using azimuthal anisotropy
parameter data — 404

Transform elastic
parameter data — 406

Fig. 5

| | Vp (m/s) | Vs (m/s) | Rho (kg/m^3) | Eps | Del | Gam | Vpae | Vsae | Rhoae |
|---|---|---|---|---|---|---|---|---|---|
| ABOVE | 2165 | 1080 | 2150 | -0.2 | -0.1 | 0.1 | 1765 | 840 | 2640 |
| BELOW | 2450 | 1400 | 1890 | 0 | 0 | 0 | 2450 | 1400 | 1890 |

Fig. 6

|  | Vp (m/s) | Vs (m/s) | Rho (kg/m^3) | Eps | Del | Gam | Vpae | Vpae | Vpae |
|---|---|---|---|---|---|---|---|---|---|
| ABOVE | 2160 | 810 | 2030 | 0 | 0 | 0 | 2150 | 810 | 2030 |
| BELOW | 2165 | 1080 | 2150 | -0.2 | -0.1 | 0.1 | 1770 | 840 | 2630 |

Fig. 7

# Fig. 8

802 Elastic parameter data

804 Anisotropy parameter data

806 Develop transforms

808 Generate reference anisotropic azimuthal seismic data

818 Update transform parameters

810 Generate anisotropic elastic parameters

812 Appy isotropic forward modeling

814 Compare anisotropic seismic data from isotropic modeling to reference anisotropic azimuthal seismic data

816 Comparison satisfactory?

No

Yes

820 Transform functions

# Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61859361 A
- US 6901333 B, Van Riel and Debeye
- US 20100312534 A

**Non-patent literature cited in the description**

- Offset-dependent reflectivity - Theory and practice of AVO analysis. Investigations in Geophysics Series No. 8. Society of Exploration Geophysicists, 1993
- Reflection Coefficients and Azimuthal AVO Analysis in Anisotropic Media. **RÜGER, A.** Geophysical Monograph Series No. 10. Society of Exploration Geophysicists, 2002
- Understanding Seismic Anisotropy in Exploration and Exploitation. **THOMSEN, L.** Distinguished Instructor Series No. 5. Society of Exploration Geophysicists/European Association of Geoscientists and Engineers, 2002
- Offset-dependent reflectivity - Theory and practice of AVO analysis. **CASTAGNA, J. P. ; BACKUS, M. M.** Investigations in Geophysics Series, No. 8. Society of Exploration Geophysicists, 1993
- **FATTI, J. L. ; SMITH, G. C. ; VAIL, P. J. ; STRAUSS, P. J. ; LEVITT, P. R.** Detection of gas in sandstone reservoirs using AVO analysis: A 3D seismic case history using the Geostack technique. *Geophysics,* 1994, vol. 59 (9), 1362-1376